**Europäisches Patentamt**

(19) **European Patent Office**

**Office européen des brevets**

(11) Publication number : **0 526 505 B1**

(12) # EUROPEAN PATENT SPECIFICATION

(45) Date of publication of patent specification :
28.06.95 Bulletin 95/26

(51) Int. Cl.⁶ : **F16D 27/10**

(21) Application number : **91908029.1**

(22) Date of filing : **23.04.91**

(86) International application number :
**PCT/CA91/00133**

(87) International publication number :
**WO 91/16551 31.10.91 Gazette 91/25**

(54) **METHOD OF MAKING A ROTOR AND IMPROVED ELECTROMAGNETIC CLUTCH UTILIZING THE SAME.**

(30) Priority : **24.04.90 US 513630**
**09.04.91 US 682327**

(43) Date of publication of application :
**10.02.93 Bulletin 93/06**

(45) Publication of the grant of the patent :
**28.06.95 Bulletin 95/26**

(84) Designated Contracting States :
**AT BE CH DE DK ES FR GB GR IT LI LU NL SE**

(56) References cited :
**FR-A- 2 274 702**
**FR-A- 2 274 703**
**GB-A- 1 007 067**
**GB-A- 1 281 082**
**GB-A- 2 148 760**
**GB-A- 2 213 762**
**US-A- 2 919 777**
**US-A- 3 082 933**
**US-A- 3 205 989**

(56) References cited :
**US-A- 3 384 213**
**US-A- 4 694 945**
**PATENT ABSTRACTS OF JAPAN vol. 13, no. 33 (M-789)(3381) 25 January 1989, & JP-A-63243534 (MITSUBISHI) 11 October 1988**
**PATENT ABSTRACTS OF JAPAN vol. 12, no. 260 (M-270)(3107) 21 July 1988, & JP-A-63043035 (MATSUSHITA) 24 February 1988**

(73) Proprietor : **TESMA INTERNATIONAL INC.**
**300 Edgeley Boulevard**
**Concord, Ontario L4K 3Y3 (CA)**

(72) Inventor : **CERNY, Zdenek**
**22 Rosegarden Drive**
**Rural Route 9**
**Brampton, Ontario L6T 3X8 (CA)**

(74) Representative : **Laight, Martin Harvey**
**W.H. Beck, Greener & Co.**
**7 Stone Buildings**
**Lincoln's Inn**
**London WC2A 3SZ (GB)**

EP 0 526 505 B1

## Description

This invention relates to electromagnetic clutches and more particularly to electromagnetic clutches of the type used in automotive air conditioning systems to drive the compressor.

The use of electromagnetic clutches to selectively drive the compressor of an automotive air conditioning system presents peculiar difficulties which are not necessarily presented in other uses. A primary limitation is that the electrics of the clutch must be suitable to the battery powered electrics inherent in automotive operation. The limitation on the electrics involved is a function of the magnetic flux that can be generated and the magnetic flux flow paths that can be provided between the rotor and the armature plate which is connected to drive the compressor when the electrics are actuated.

A typical electromagnetic clutch includes a rotor which generally comprises an inner annular bearing portion, an annular frictional-engaging or clutch portion extending generally radially outwardly from an end of the bearing portion, and an outer annular drive portion extending from an outer end of the clutch portion in generally overlying spaced relation with respect to the inner bearing portion. The spacing between the inner and outer annular portions receives the electromagnetic coil therebetween which is energized to create the flux field in the rotor. The clutch portion includes a series of arcuate slots, frequently referred to as banana slots, and cooperates with an armature plate which itself has cooperating arcuate slots therein. The purpose of the arcuate slots is to direct the flux field back and forth between the armature plate and clutch portion of the rotor which, in turn, is a measure of the efficiency of the magnetic attraction between the armature plate and the rotor. The magnetic attraction between the rotor and armature plate thus generated enables the torque of the rotor to be transmitted to the armature plate and hence, in turn, to the compressor. The transmission of torque from the rotor to the armature is a function of the magnetic attraction that can be generated between the rotor and armature plate and the lever arm through which the attraction acts. As the diameter of the rotor and armature plate is increased, the amount of torque which can be transmitted for the same magnetic attraction is increased. However, for each incremental increase in diameter size, the size and weight of the rotor increase by a square function with a commensurate increase in cost.

Thus, it is not just a simple matter of increasing the diameter size of the rotor to suit the electrical capabilities. This is particularly true when it is considered that, within the engine compartment, both space and weight are at a premium. Moreover, there is a trend toward automotive systems requiring that the compressor operate at greater speeds. Rotor speed is simply a function of the diameter size of the rotor pulley or other exterior driving surface provided by the outer annular portion. More and more it is becoming desirable to maximize the diameter size of the rotor at the clutch end which interfaces with the armature plate while minimizing the diameter size of the remaining portion which must provide the exterior driving surface and house the magnetic coil.

The need to provide this configuration has materially increased the difficulty and costs of making the rotor. Whereas before, the inner and outer annular portion could both be cylindrical and disposed in parallel relation, it became necessary to provide an interior space adjacent the clutch portion with a radial dimension greater than the radial dimension of the remaining interior space. Stated differently, instead of the flux path being simply axially outwardly along the outer rotor portion to the outer end of the clutch rotor portion, the flux path had to extend upwardly and outwardly along the outer portion to the outer end of the clutch portion. With this interior space configuration, a one-piece forging could no longer be utilized. The current practice is to forge or otherwise form the rotor in two parts, one of which provides the inner cylindrical portion and the clutch portion and the other of which provides the outer portion. It has long been known that the inherent joint which must result from joining the two parts presents a barrier in the magnetic flux path which diminishes the magnetic efficiency of the unit. Moreover, it is more costly to fabricate two parts and then unite the two parts than it is to fabricate a one-piece part.

There have been many efforts to achieve this type of configuration in a one-piece part which will eliminate the inherent debilitating joint.

It has been proposed to make a one-piece rotor from steel by forging and machining procedures, but the configurations which can be made are limited and costs are high. This basic type of procedure and the limitations and disadvantages thereof are set forth in U. S. Patent No. 4,694,945, (Koitabashi) as the known state of the art of one-piece rotor technology upon which the disclosed subject matter is proposed as an improvement. The improvement of the disclosed subject matter in that patent is to start with a plate in a washer-like configuration made of steel or any other magnetic material which is capable of being pressed and drawn. The washer-like blank is first pressed and drawn to provide an inner cylindrical wall, a radial wall extending cut from one end thereof and an outer cylindrical wall extending from the outer periphery of the radial wall in generally coextensive relation with the inner cylindrical wall. In short, the first step is to cold form from the flat washer a simple side opening U-shaped configuration. In this form, the arcuate slots are cut into the radial wall. Next, the side opening U-shaped blank is subjected to reverse drawing or upset working to press outer and inner cylindrical enlargements at the juncture of the radial wall with the inner and outer walls after which the inner wall is larger in diameter than its enlargement joint and the outer wall is smaller in diameter than its enlargement joint.

While the disclosed mode of proceeding and the resultant configuration may be regarded as cost effective when compared with forging and the configurations which can be achieved in this manner, it is readily apparent that there are still severe limitations on the configuration which can be achieved.

In Japanese Patent Publication No. 61-59028 (Kabayashi), a configuration similar to that disclosed in the aforesaid U. S. Patent No. 4,694,945, (Koitabashi) is said to be achieved by starting with a blank having an exterior configuration like that of the finished rotor of the U. S. patent and an inner configuration defined by two cylinders intersected by a radial plane. In short, the starting body has a simple rectangular opening but the exterior enlargements are already formed. In addition, it is proposed that the starting body would also have exterior non-through arcuate openings formed therein. The Japanese disclosure indicates that the initial body is manufactured through a process of closed forging in much the same way the U. S. patent describes the prior art. In addition, the Japanese publication disclosure suggests that the initial body could also be cast of cast steel. Once the initial body is provided, the interior surfaces are machined using an undercutting tool to open up the slots. Here again, the final configurations which can be obtained are severely limited. There still exists a need for a cost-effective way of making an electromagnetic clutch rotor in one piece suitable for automotive use which is not restricted in the configurations which can be achieved by presently known methods.

It is an object of the present invention to fulfill the need expressed above. It has been found that the key to solving the problem of the way to manufacture the rotor does not reside in developing a new procedure but rather in utilizing a material to make the one-piece clutch rotor which, so far as is known, has never been used before to make such a clutch rotor. It is known from US-A-2,919,777 (Walter) to utilise cast iron in the production of a two part rotor body, but the techniques taught were not used to produce a one-piece rotor body of the type required in modern automotive applications. The material which is utilized in accordance with the principles of the present invention is one which could not be used in the process of U.S. Patent No. 4,694,945 (Koitabashi) because it cannot be pressed and drawn in the manner required of the material of the U.S. patent process. Both steel, and cast steel as taught in JP-61-59028 (Kabayashi), are inappropriate as materials in accordance with the principles of the present invention.

In accordance with the present invention there is provided a method of making a rotor for an electromagnetic clutch, comprising: casting a rotor body, and forming from the rotor body a rotor; said rotor having an inner annular portion, an annular clutch portion extending outwardly from an end of said inner annular portion and having a series of arcuate slots extending therethrough, and an outer annular portion extending from an outer end of said annular clutch portion, said arcuate slots comprising an inner series of arcuate slots extending through said clutch portion and an outer series of arcuate slots extending through said clutch portion; said clutch portion having coupling surface means for engaging cooperating coupling surface means of an armature having a series of arcuate slots therein cooperable with the arcuate slots of said clutch portion so as to establish a magnetic flux path which passes back and forth between the rotor clutch portion and the armature a plurality of times; and said inner and outer annular portions having opposed annular surface means for cooperating with a fixed annular magnetic coil therebetween so that when the magnetic coil is energized a magnetic flux field is established within flux paths within said inner and outer annular portions connecting with the flux path between the rotor clutch portion and the armature; said method comprising the steps of casting said rotor body as a one-piece body of cast iron having a configuration which includes the said series of arcuate slots extending through the clutch portion and which, after surface finishing, forms the entirety of said rotor, said one-piece body of cast iron being provided with cast surface means defined by the casting procedure for providing, after surface finishing, said coupling surface means and said opposed annular surface means of said rotor, and providing said finished surface means by removing a relatively small amount of cast iron from said one-piece cast iron body including the cast iron defining said cast surface means.

In a preferred form of the invention, the relatively small amount of cast iron removed from said one-piece cast iron body comprises a layer including said cast surface means and having a thickness between .6 and 1.2 millimeters.

Also in preferred forms of the invention said cast iron is ferritic ductile cast iron with nodular graphite which comprises in addition to iron the following components and amounts thereof:

| C  | - | 2.8  | to 3.8  | wt. % |
| Si | - | 1.8  | to 5.5  | wt. % |
| Mn | - | 0.01 | to 0.5  | wt. % |
| Mg | - | 0.01 | to 0.07 | wt. % |
| Cu | - | 0.1  | to 0.6  | wt. % |
| Co | - | 0.1  | to 0.5  | wt. % |
| P  | - | 0.0  | to 0.20 | wt. % |
| S  | - | 0.0  | to 0.20 | wt. % |

In some forms of the invention it may be arranged that the amount of said Si component is within the range of 1.8 to 4.75 wt. %. In one form, the said cast iron comprises in addition to iron the following components and amounts thereof:

| C  | - 3.2 wt. % |
| Si | - 3.25 wt. % |
| Mn | - 0.1 wt. % |
| Mg | - 0.02 wt. % |
| Cu | - 0.3 wt. % |
| Co | - 0.3 wt. % |
| P  | - 0.01 wt. % |
| S  | - 0.01 wt. % |

In such forms of the invention, it may be arranged that the procedure for removing a small amount of cast iron defining the cast surface means for providing said coupling surface means is a lathe-turning procedure which obtains a machined coupling surface means, the step of providing of said finished coupling surface means also including surface hardening the machined coupling surface means to provide said finished coupling surface means. Conveniently said surface hardening is a gas nitriding treatment under heat. Also conveniently the procedure for removing a small amount of cast iron defining the cast surface means for providing said opposed annular surface means is a lathe-turning procedure which obtains machined opposed surface means, the step of providing said finished opposed annular surface means also including surface hardening the machined opposed surface means to provide surface hardened opposed surface means and thereafter painting the surface hardened opposed surface means to providing the finished opposed surface means.

In some other forms of the invention, it may be arranged that the amount of said Si component is within the range of 5.0 to 5.25 wt.%, and in the step of providing said finished coupling surface means the procedure for removing a relatively small amount of cast iron defining said cast surface means for providing said finished coupling surface means is an electro-discharge machine procedure which produces said finished coupling surface means.

Conveniently in the method of the invention generally, it may be arranged that said cast iron body is cast by a casting procedure which includes the steps of forming a pattern of said cast iron body from a material capable of being vaporized when contacted by molten cast iron, placing casting sand around the pattern in such a way as to leave a location to receive molten cast iron, pouring molten cast iron into the receiving location until the pattern is vaporized by the molten cast iron and the cast iron replaces the pattern within the casting sand, allowing the molten cast iron to solidify to form said cast iron body and then separating the solidified cast iron body from the casting sand. Conveniently, said pattern is formed of polystyrene and is coated with a refractory before the casting sand is placed therearound.

There may also be provided in accordance with the present invention an electromagnetic clutch comprising a rotor rotatable about a rotational axis, said rotor having a cast rotor body, an armature operable to be magnetically coupled with said rotor for rotation therewith, and a fixed annular magnetic coil energizable to magnetically couple said rotor and armature, said rotor including an inner annular portion, an annular clutch portion extending outwardly from an end of said inner annular portion and an outer annular portion extending from an outer end of said clutch portion, said annular clutch portion including rotor coupling surface means and a series of arcuate slots extending from said coupling surface means through said annular clutch portion, said arcuate slots comprising an inner series of arcuate slots extending through said clutch portion and an outer series of arcuate slots extending through said clutch, said armature including an armature plate having armature coupling surface means for engaging said rotor coupling surface means and a series of arcuate slots positioned in cooperating relation with respect to the series of arcuate slots of said rotor clutch portion so as to establish a magnetic flux path which passes back and forth between said rotor clutch portion and said armature plate a plurality of times, said inner and outer annular portions including opposed spaced annular surface means for receiving said annular magnetic coil therebetween so that when said magnetic coil is energized a magnetic flux field is established within magnetic flux paths within said inner and outer annular rotor portions connecting with said magnetic flux path between said clutch portion and said armature plate, characterised in that the rotor is formed as a one-piece body of cast iron having said inner and outer series of arcuate slot defined by cast surfaces of said one-piece body of cast iron.

In one preferred form, said cast iron is ferritic ductile cast iron with nodular graphite.

Yet further preferred and optional features and combinations of features will now be described. In accordance with the principles of the present invention, the objectives can be achieved by utilizing cast iron as the material so that it becomes possible to initially form the clutch rotor into any configuration which can be achieved by sand-casting methods. Of primary importance is the relatively low pouring temperatures involved and the relatively low shrinkage rates as compared with steel. The relatively high pour temperatures and shrinkage rates of steel make the use of steel impractical because of stress cracking in the webs between the arcuate slots. Moreover, these inherent characteristics make it virtually impossible to achieve the accuracies required to make the use of casting procedures cost effective. The accuracies which can be achieved with cast iron ensures that only relatively small amounts of cast iron material need be removed to provide a finished rotor, thus resulting in substantial savings in material wastage. Applicant has found that the higher carbon content of cast iron as compared with steel does not detrimentally effect the magnetic flux carrying properties of the material to the extent that might seem probable. It is believed this is because the larger amount of carbon contained in cast iron in comparison with steel is mostly in the form of graphite which is not as detrimental to magnetic flux-carrying characteristics as carbon in other forms such as are prevalent in steel. Moreover, applicant has found that when the graphite is nodular rather than flaky even less detriment to the magnetic flux-carrying characteristics are evident. Moreover, the higher coefficient of friction of cast iron results in an enhancement of the coupling ability of the rotor.

Embodiments of the invention will now be described by way of example with reference to the accompanying drawings in which:-

Figure 1 is a vertical sectional view of a rotor body cast of cast iron in accordance with the principles of the present invention;

Figure 2 is a vertical section view of an electromagnetic clutch constructed in accordance with the principles of the present invention;

Figure 3 is a sectional view taken along the line 3-3 of Figure 2; and

Figure 4 is a sectional view taken along the line 4-4 of Figure 2.

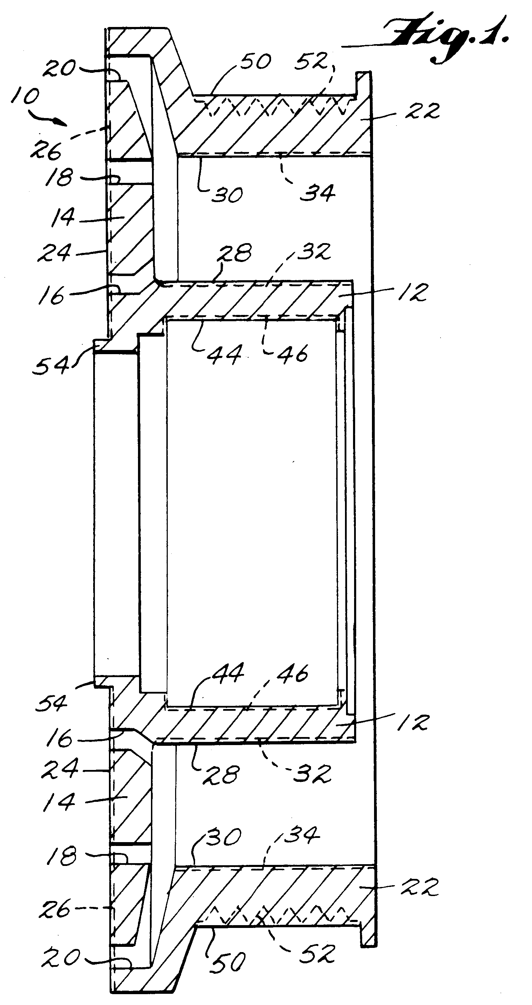

Referring now more particularly to Figure 1 of the drawings, there is shown therein an electromagnetic clutch rotor body, generally indicated at 10, which has been cast in accordance with the principles of the present invention. A fundamental principle underlying the present invention is that the rotor is cast of cast iron rather than steel. In this regard, it has been found that the greater amount of carbon which is present in cast iron in comparison with steel does not detrimentally affect the magnetic properties of the cast iron rotor to the extent that would be expected. It is believed that the reason for this is that much of the carbon that is contained within cast iron is contained in the form of graphite rather than in the form which it appears in steel. Applicant has found that, while pearlitic cast iron with flaky graphite can be used, it is greatly preferred to utilized ferritic cast iron with nodular graphite. The nodular form of graphite seems to provide less of a barrier to magnetic flux flow. Ferritic cast iron with its nodular graphite is a desirable magnetically "soft" material, exhibiting a higher permeability and a lower coercive force resulting in a relatively lower hysteresis loss than that of pearlitic cast iron. Consequently, while in its broadest form, the invention contemplates both pearlitic and ferritic cast iron. The ferritic ductile cast iron is preferred and, more specifically, ferritic ductile cast iron which contains, in addition to the iron, the following components in the following amounts expressed in ranges:

| | | | | | | |
|---|---|---|---|---|---|---|
| C | — | 2.8 | to | 3.8 | wt. | % |
| Si | — | 1.8 | to | 5.5 | wt. | % |
| Mn | — | 0.01 | to | 0.5 | wt. | % |
| Mg | — | 0.01 | to | 0.07 | wt. | % |
| Cu | — | 0.1 | to | 0.6 | wt. | % |
| Co | — | 0.1 | to | 0.5 | wt. | % |
| P | — | 0.0 | to | 0.20 | wt. | % |
| S | — | 0.0 | to | 0.20 | wt. | % |

In conjunction with the utilization of cast iron, it has been found that the provision of a cast iron coupling surface actually enhances the ability of the rotor to transmit torque to the armature. It is thought that this may be because of the higher coefficient of friction of cast iron in comparison with steel. The hardness of the coupling surface is also a factor which contributes to the torque-transmitting capability of the present rotor. The silicon content within the cast iron determines to a considerable extent the hardness of the cast iron. The range given in the preferred embodiment is from 1.8 to 5.5. In the upper end of this range (e.g., 4.75 to 4.4), the amount of silicon is such as to impart a hardness to the cast iron body that renders it difficult to finish the surfaces which must be finished after the casting operation has been completed. With a silicon content in the high end range, the cast iron is of such hardness that the surface finishing cannot be economically performed by simple machining procedures such as turning on a lathe or grinding the surfaces. Instead, it becomes necessary to utilize more sophisticated equipment, as, for example, electro-discharge machines, which is, of course, more costly than conventional equipment.

Accordingly, a preferred range of the silicon is from 1.8 to 4.75 because within this range there is sufficient hardness imparted to the cast iron that surfaces requiring finishing can be accomplished simply by machining on the lathe or other such procedures without the necessity of resorting to more sophisticated equipment. It is noted, however, that insofar as the coupling surface itself is concerned within the preferred range it is desirable to complete the finishing of the coupling surface by surface hardening the surface.

With the above in mind, set forth below is a preferred cast iron which, in addition to the iron content, contains the following components and amounts:

| | |
|---|---|
| C | - 3.2 wt. % |
| Si | - 3.25 wt. % |
| Mn | - 0.1 wt. % |
| Mg | - 0.02 wt. % |
| Cu | - 0.3 wt. % |
| Co | - 0.3 wt. % |
| P | - 0.01 wt. % |
| S | - 0.01 wt. % |

A further advantage of the utilization of cast iron is that the molten temperature and the shrinkage ratio enable the material to be cast with an accuracy which requires the removal of very little material so that there is very little waste material which is created in making the rotor. Moreover, the resultant casting has a good integrity and the characteristics with respect to stress cracking are satisfactory.

The rotor body 10 may be cast utilizing any of the known sand-casting procedures. These include investment castings, lost wax castings, and evaporate pattern castings. A preferred evaporate pattern casting method which is utilized in accordance with the principles of the present invention is specifically lost foam casting. The procedures utilized to accomplish the casting are those which are set forth in the article entitled "Unbonded Sand Molds" appearing on pages 230-234 in the 9th Edition, Volume 50, of the American Society for Metals, Metals Handbook, and may be considered as a detailed backqround of the preferred procedure. For present purposes, it is sufficient to note that the casting procedure includes the steps of forming a pattern or model of the cast iron rotor body from a material capable of being vaporized when contacting by molten cast iron, placing casting sand around the pattern in such a way as to leave a location to receive molten cast iron, pouring the molten cast iron into the receiving location until the pattern is vaporized by the molten cast iron and the cast iron replaces the pattern within the casting sand, allowing the molten cast iron to solidify to form the cast iron rotor body, and then separating the solidified cast iron rotor body from the casting sand.

More specifically, in forming the pattern, polystyrene beads are pre-molded into patterns and then glued in clusters with a gating system. The clusters are then dipped into a refractory coating and dried. The coated clusters are then secured in suitable position within individual casting flasks and a pouring cup is attached to the cluster to provide the pouring location. The flask is then filled with loose unbonded sand and packed around the cluster by imparting suitable vibrational movements to the flask and its contents. The molten iron, in accordance with the characteristics noted above, is first treated in conventional fashion to obtain the aforesaid iron and chemical composition and is then poured at a temperature of between 1,390° to 1,410° C. into the cup, rapidly evaporating the low density patterns and gating and solidifying in approximately 40 minutes to a temperature of about 400° C. to obtain the cast iron rotor body such as shown in Figure 1. When the cooling cycle is completed or after a secondary cooling to room temperature if desired, the cluster is removed from the flask. Individual model patterns are separated and then cleaned.

As shown in Figure 1, the cast iron rotor body 10 is cast so as to have a configuration which is similar to the configuration required when used in an electromagnetic clutch assembly. Basically, the configuration includes an inner annular portion 12, an annular clutch portion 14 extending outwardly from an end of the inner annular portion 12 and having a series of inner, intermediate, and outer arcuate slots 16, 18, and 20 extending therethrough and an outer annular portion 22 extending from an outer end of the annular clutch portion 14. The clutch portion 14 has a cast surface 24 on the side thereof remote from the inner and outer portions 12 and 22 which is formed in the casting procedure instead of a coupling surface 26, shown in dotted lines in Figure 1, finished after the casting operation to perform a clutch coupling function in operation. The inner and outer annular portions 12 and 22 have opposed annular cast surfaces 28 and 30, which are formed in the casting procedure instead of opposed annular surfaces 32 and 34, shown in dotted lines in Figure 1, finished after the casting operation to perform a magnetic flux field receiving function.

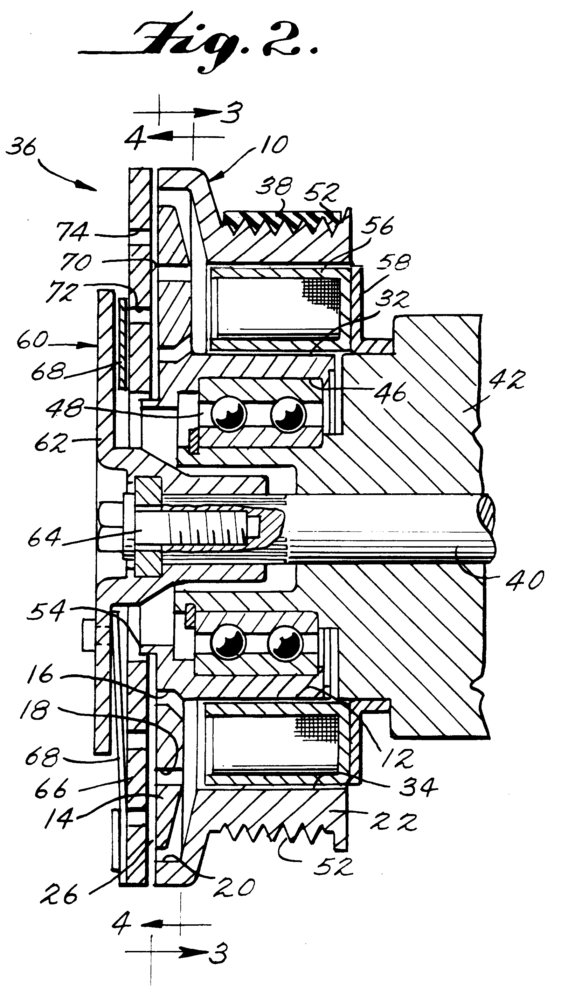

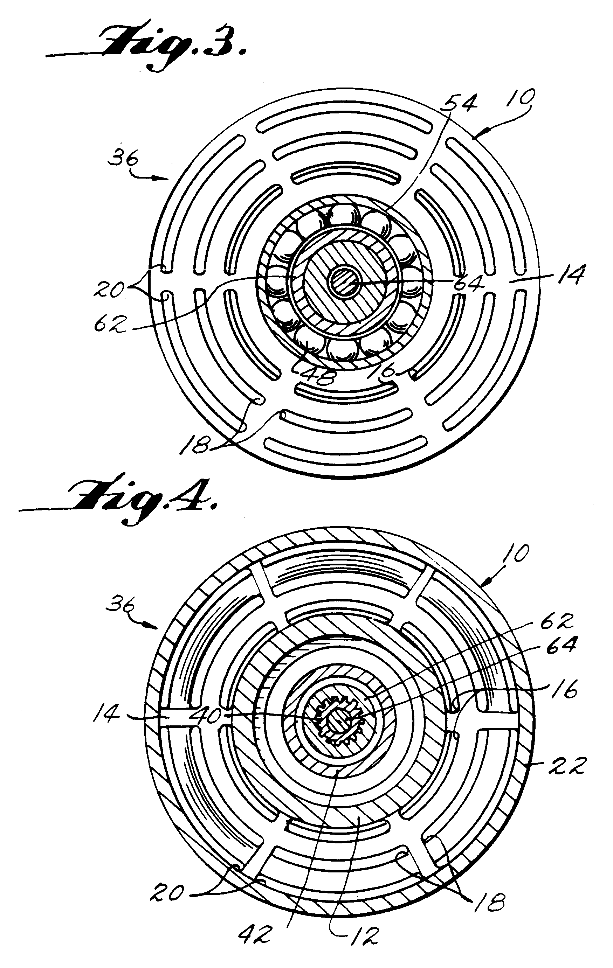

In addition to the surfaces required for the flux carrying and clutch coupling functions, the rotor must also interface with other structure which effects its rotational mounting and driving connection. In its simplest form, this interface may simply be a fixed connection with a driven or driving shaft. The rotor body 10 shown in Figure 1 is particularly configured for use in an electromagnetic clutch, generally indicated at 36, and shown in Figures 2-4 connected to be driven by the serpentine belt 38 of an automotive serpentine accessory drive so as to selectively drive a compressor shaft 40 rotatably mounted within and extending outwardly from a compressor housing 42 of the compressor assembly of the accessory drive.

To this end, it will be noted that the inner portion 12 of the cast iron rotor body 10 has an inner annular cast surface 44 which is formed in the casting operation instead of an inner annular surface 46, shown in dotted lines in Figure 1. As best shown in Figure 3, the surface 46 is finished so as to engage the outer race of a ball bearing assembly 48, the inner race of which is mounted on the fixed support provided by the compressor housing 42. The outer annular portion 22 of the rotor body 10 has a cast outer annular surface 50, which is formed during the casting operation instead of an outer poly-V surface configuration 52. As best shown in Figure 2, the poly-V surface configuration 52 is finished after the casting operation so as to be drivingly engaged by the poly-V belt 38.

As an added feature suitable for the particular application, the rotor body 10 is cast to include an annular grease guard portion 54. As shown, the grease guard portion 54 is disposed within the junction between the inner annular portion 12 and the clutch portion 14 and extends slightly axially therefrom.

As previously indicated, it is an important feature that the finished surfaces 26, 32, 34, 46, and 52 can be provided in a cost effective manner after the rotor body 10 has been cast in a cost effective manner. Cost effectiveness is achieved by minimizing the amount of cast iron material which must be removed to provide the finished surfaces and by utilizing the more conventional machining procedures to effect material removal. In addition, the only surface treatments that are required are surface hardening and corrosion resistance.

The finished surfaces 26, 32, 34, and 46 are all preferably turned on a lathe. The accuracy which can be achieved in the casting body 10 is such that the amount of material removed is a layer which including the cast surfaces 24, 28, 30, and 44 of a thickness of within 0.6 to 1.2 millimeters. The other finished surface 52 can likewise be turned on a lathe. The cast surface 50 is a cylindrical surface rather than a poly-V surface because, in turning the poly-V surface 52, it is simpler to start with a cylindrical surface than a poly-V. It will be understood that, where the drive configuration is a V-belt configuration, the cast surface would be parallel with the V and the material removed would be a layer within the range previously noted. It will also be noted that the material removal in order to make the poly-V surface 52 is minimized by making the crests of the poly-V grooves within the aforesaid range from the cast surface 50.

Surface hardening is desirable in the finishing of the clutch coupling surface 26. A preferred surface hardening procedure is a gas nitriding treatment which is carried on for a time period and at a temperature sufficient to establish a resultant white layer within a range of 10-15 microns. It will be understood that other surface hardening treatments may be utilized if desired such as flame hardening, induction hardening, carbonitriding, plating, ion implantation, carburizing, vapor disposition, electrolysis nickel deposition, plasma, thermal-spray and similar other procedures. The preferred gas nitriding procedure is carried out after all of the machining operations have been completed and, since the gas nitriding procedure is carried out in an oven, not only the coupling surface 26 is heat treated but the other surfaces of the casting as well including the other machine surfaces.

With respect to the corrosion resistance treatment, this could be a special heat treatment but a preferred treatment is to simply apply a coat of paint to the surfaces which require it. Basically, the manner in which the painting procedure is carried out is to face off the coupling surface 26 and the bearing engaging surface 46 and simply spray the remaining surfaces with a suitable corrosive resistant paint which does not affect the magnetic flux carrying capabilities.

It will be understood that, once the rotor body 10 has been provided with the finished surfaces, the finished rotor 10 can then form a part of an electromagnetic clutch, such as the clutch 36 shown in Figure 2. In this regard, it will be noted that the clutch 36 also includes an annular electromagnetic coil 56 which is fixed to the support provided by the compressor housing 42 by any suitable means such as bracket 58. The magnetic coil 56 is held in fixed relation within the space between the finished surfaces 32 and 34 of the rotor 10. The electromagnetic clutch 36 also includes an armature assembly, generally indicated at 60, which includes an annular mounting member 62 which is splined to the end of the compressor shaft 40 and fixedly secured thereon as by a bolt 64. The armature assembly 60 also includes an armature plate 66 which is connected with the armature mounting member 62 to rotate therewith and to have a limited amount of axial movement with respect thereto. This functional mounting of the armature plate 66 with the armature mounting member 62 is accomplished in the usual fashion by three resilient strap members 68 having opposite ends suitably pinned to the armature mounting member 62 and the armature plate 66.

It will be noted that the armature plate 66 is preferably formed of steel in the usual manner although it is within the scope of the present invention to cast the armature plate of cast iron in accordance with the procedures noted above for the rotor. In accordance with usual practice, the armature plate 66 includes a coupling surface 70 and a series of inner and outer arcuate slots 72 and 74 which are disposed in cooperating relation with respect to the series of arcuate slots 16, 18, and 20 in the rotor clutch portion 14 so that the magnetic flux generated by the magnetic coil 56 will be caused to flow in a flux path which extends between the clutch portion 14 and the armature plate 66 a plurality of times.

As shown, when the electromagnetic coil 56 is energized, a magnetic field is established which creates a magnetic flux flow path from the magnetic coil 56 through the outer annular portion 22 of the rotor past outer arcuate slots 20 and then onto the armature plate 66. Because of the outer slots 74 of the armature plate 66, the magnetic flux flows in a path back to the clutch portion 14 inwardly of the outer arcuate slots 20. The magnetic flux path continues until it reaches the intermediate arcuate slots 18 at which point it passes over to the armature plate 66 inwardly of the outer slots 74 therein. The inner slots 72 of the armature plate 66 cause the magnetic flux path to again cross over to the clutch portion 14 inwardly of the intermediate slots 18. Again, the inner arcuate slots 16 cause the magnetic flux path to again cross to the armature plate 66 below the inner slots 72. From the inner portion of the armature plate 66, the magnetic flux path is returned to the magnetic coil through clutch portion 14 and the inner portion 12. The manner in which the flux path is established between the rotor 10 and the armature plate 66 serves to move the armature plate axially so as to engage the armature coupling surface 70 with the rotor coupling surface 26. In this way, the rotary motion imparted to the rotor 10 by the serpentine belt 38 is transmitted to the compressor shaft 40.

Another important feature of the rotor 10 constructed in accordance with the principles of the present invention is that a much wider variety of different configurations can be produced. This is particularly important in that the inner and outer slots can be formed through the clutch portion 14 with angular bends or arcuate turns and it is not essential that the slots be straight through as is required in other procedures. This enables the magnetic flux path to be extended between the rotor 10 and the armature plate 66 to a greater outer extent along the outer areas of the crossing path and to a greater inner extent along the inner crossing path which insures a greater torque transmitting capability. The present invention is more particularly concerned with the method of making the rotor and the basic improvement in the electromagnetic clutch when utilized therein. Consequently, the method and improvement of the present invention are applicable not only to the specific electromagnetic clutch configuration shown in Figures 2-4 and the other specific configurations of my copending application, but any other configuration as well.

## Claims

1. A method of making a rotor for an electromagnetic clutch, comprising:

casting a rotor body, and forming from the rotor body a rotor (10);

said rotor (10) having an inner annular portion (12), an annular clutch portion (14) extending outwardly from an end of said inner annular portion (12) and having a series of arcuate slots (16,18,20) extending therethrough, and an outer annular portion (22) extending from an outer end of said annular clutch portion (14), said arcuate slots comprising an inner series of arcuate slots (16) extending through said clutch portion (14) and an outer series of arcuate slots (20) extending through said clutch portion (14);

said clutch portion (14) having coupling surface means (26) for engaging cooperating coupling surface means (70) of an armature (60) having a series of arcuate slots (72,74) therein cooperable with the arcuate slots (16,18,20) of said clutch portion (14) so as to establish a magnetic flux path which passes back and forth between the rotor clutch portion (14) and the armature (60) a plurality of times; and

said inner and outer annular portions (12,22) having opposed annular surface means (32,34) for cooperating with a fixed annular magnetic coil (56) therebetween so that when the magnetic coil (56) is energized a magnetic flux field is established within flux paths within said inner and outer annular portions (12,22) connecting with the flux path between the rotor clutch portion (14) and the armature (60);

said method comprising the steps of

casting said rotor body as a one-piece body of cast iron having a configuration which includes the said series of arcuate slots (16,18,20) extending through the clutch portion (14) and which, after surface finishing, forms the entirety of said rotor (10), said one-piece body of cast iron being provided with cast surface means (24,28,30) defined by the casting procedure for providing, after surface finishing, said coupling surface means (26) and said opposed annular surface means (32,34) of said rotor, and

providing said finished surface means (26, 32, 34) by removing a relatively small amount of cast iron from said one-piece cast iron body including the cast iron defining said cast surface means (24,28,30).

2. A method as defined in claim 1 wherein the relatively small amount of cast iron removed from said one-piece cast iron body comprises a layer including said cast surface means and having a thickness between .6 and 1.2 millimeters.

3. A method as defined in claim 1 or 2 wherein said cast iron is ferritic ductile cast iron with nodular graphite which comprises in addition to iron the following components and amounts thereof:

| | | | | | |
|---|---|---|---|---|---|
| C | – | 2.8 | to 3.8 | wt. | % |
| Si | – | 1.8 | to 5.5 | wt. | % |
| Mn | – | 0.01 | to 0.5 | wt. | % |
| Mg | – | 0.01 | to 0.07 | wt. | % |
| Cu | – | 0.1 | to 0.6 | wt. | % |
| Co | – | 0.1 | to 0.5 | wt. | % |
| P | – | 0.0 | to 0.20 | wt. | % |
| S | – | 0.0 | to 0.20 | wt. | % |

4. A method as defined in claim 3 wherein the amount of said Si component is within the range of 1.8 to 4.75 wt. %.

5. A method as defined in claim 4 wherein said cast iron comprises in addition to iron the following components and amounts thereof:
C        - 3.2 wt. %
Si       - 3.25 wt. %
Mn      - 0.1 wt. %
Mg      - 0.02 wt. %
Cu       - 0.3 wt. %
Co       - 0.3 wt. %
P        - 0.01 wt. %
S        - 0.01 wt. %

6. A method as defined in claim 4 or 5 wherein the procedure for removing a small amount of cast iron defining the cast surface means for providing said coupling surface means (26) is a lathe-turning procedure which obtains a machined coupling surface means (26), the step of providing of said finished coupling surface means (26) also including surface hardening the machined coupling surface means to provide said finished coupling surface means.

7. A method as defined in claim 6 wherein said surface hardening is a gas nitriding treatment under heat.

8. A method as defined in any of claims 4 to 7 wherein the procedure for removing a small amount of cast iron defining the cast surface means for providing said opposed annular surface means (32, 34) is a lathe-turning procedure which obtains machined opposed surface means, the step of providing said finished opposed annular surface means (32,34) also including surface hardening the machined opposed surface means to provide surface hardened opposed surface means and thereafter painting the surface hardened opposed surface means to providing the finished opposed surface means.

9. A method as defined in claim 3 wherein the amount of said Si component is within the range of 5.0 to 5.25 wt.%, and in the step of providing said finished coupling surface means the procedure for removing a relatively small amount of cast iron defining said cast surface means for providing said finished coupling surface means is an electro-discharge machine procedure which produces said finished coupling surface means.

10. A method as defined in any preceding claim wherein said cast iron body (10) is cast by a casting procedure which includes the steps of forming a pattern of said cast iron body from a material capable of being vaporized when contacted by molten cast iron, placing casting sand around the pattern in such a way as to leave a location to receive molten cast iron, pouring molten cast iron into the receiving location until the pattern is vaporized by the molten cast iron and the cast iron replaces the pattern within the casting sand, allowing the molten cast iron to solidify to form said cast iron body (10) and then separating the solidified cast iron body from the casting sand.

11. A method as defined in claim 10 wherein said pattern is formed of polystyrene and is coated with a refractory before the casting sand is placed therearound.

12. An electromagnetic clutch comprising
   a rotor (10) rotatable about a rotational axis, said rotor having a cast rotor body,
   an armature (60) operable to be magnetically coupled with said rotor (10) for rotation therewith, and
   a fixed annular magnetic coil (56) energizable to magnetically couple said rotor and armature (60),
   said rotor (10) including an inner annular portion (12), an annular clutch portion (14) extending outwardly from an end of said inner annular portion (12) and an outer annular portion (22) extending from an outer end of said clutch portion (14),
   said annular clutch portion (14) including rotor coupling surface means (26) and a series of arcuate slots (16,18,20) extending from said coupling surface means (26) through said annular clutch portion (14), said arcuate slots comprising an inner series of arcuate slots (16) extending through said clutch portion (14) and an outer series of arcuate slots (20) extending through said clutch (14),
   said armature (60) including an armature plate (66) having armature coupling surface means (70) for engaging said rotor coupling surface means (26) and a series of arcuate slots (72,74) positioned in cooperating relation with respect to the series of arcuate slots (16,18,20) of said rotor clutch portion (14) so as to establish a magnetic flux path which passes back and forth between said rotor clutch portion (14) and said armature plate (66) a plurality of times,
   said inner and outer annular portions (12,22) including opposed spaced annular surface means (32,34) for receiving said annular magnetic coil (56) therebetween so that when said magnetic coil is energized a magnetic flux field is established within magnetic flux paths within said inner and outer annular rotor portions (12,22) connecting with said magnetic flux path between said clutch portion (14) and said armature plate (66),
   characterised in that the rotor (10) is formed as a one-piece body of cast iron having said inner and outer series of arcuate slots (16,18,20) defined by cast surfaces of said one-piece body of cast iron.

13. An electromagnetic clutch as defined in claim 12 wherein said cast iron is ferritic ductile cast iron with nodular graphite.

14. An electromagnetic clutch as defined in claim 12 or 13 wherein said cast iron comprises in addition to iron the following components and amounts thereof:

```
C     -    2.8    to 3.8  wt.  %
Si    -    1.8    to 5.5  wt.  %
Mn    -    0.01   to 0.5  wt.  %
Mg    -    0.01   to 0.07 wt.  %
Cu    -    0.1    to 0.6  wt.  %
Co    -    0.1    to 0.5  wt.  %
P     -    0.0    to 0.20 wt.  %
S     -    0.0    to 0.20 wt.  %
```

**15.** An electromagnetic clutch as defined in claim 14 wherein the amount of said Si component is within the range of 1.8 to 4.75 wt. %.

**16.** An electromagnetic clutch as defined in claim 15 wherein said cast iron comprises in addition to iron the following components and amounts thereof:

C    - 3.2 wt. %
Si   - 3.25 wt. %
Mn   - 0.1 wt. %
Mg   - 0.02 wt. %
Cu   - 0.3 wt. %
Co   - 0.3 wt. %
P    - 0.01 wt. %
S    - 0.01 wt. %

## Patentansprüche

**1.** Verfahren zur Herstellung eines Rotors für eine elektromagnetische Kupplung, welches Verfahren aufweist:
Gießen eines Rotorkörpers und Bilden eines Rotors (10) aus dem Rotorkörper;
wobei der Rotor (10) einen inneren ringförmigen Bereich (12), einen ringförmigen Kupplungsbereich (14), welcher sich von einem Ende des inneren ringförmigen Bereichs (12) erstreckt und eine Folge von hindurchgehenden gekrümmten Schlitzen (16, 18, 20) hat, und einen äußeren ringförmigen Bereich (22) aufweist, der sich von einem äußeren Ende des ringförmigen Kupplungsbereichs (14) erstreckt, wobei die gekrümmten Schlitze eine innere Folge von gekrümmten Schlitzen (16), welche durch den Kupplungsbereich (14) hindurch verlaufen, und eine äußere Folge von gekrümmten Schlitzen (20) aufweisen, die durch den Kupplungsbereich (14) hindurch verlaufen;
wobei der Kupplungsbereich (14) Kopplungsoberflächenmittel (26) zum Angriff an zusammenwirkenden Kopplungsoberflächenmitteln (70) eines Läufers (60) aufweist, der eine Folge von gekrümmten Schlitzen (72, 74) darin aufweist, die mit den gekrümmten Schlitzen (16, 18, 20) des Kupplungsbereichs (14) zusammenwirken können, um so einen Magnetflußweg zu bilden, der vielfach hin und her zwischen dem Rotorkupplungsbereich (14) und dem Läufer (60) verläuft; und
wobei die inneren und äußeren ringförmigen Bereiche (12, 22) gegenüberliegende, ringförmige Oberflächenmittel (32, 34) zum Zusammenwirken mit einer feststehenden ringförmigen Magnetspule (56) dazwischen aufweisen, um so, wenn die Magnetspule (56) mit Strom versorgt wird, ein Feld magnetischen Flusses in den Flußwegen in den inneren und äußeren ringförmigen Bereichen (12, 22) zu bilden, das mit dem Flußweg zwischen dem Rotorkupplungsbereich (14) und dem Läufer (60) verbunden ist;
wobei das Verfahren die Schritte aufweist:
Gießen des Rotorkörpers als einstückigen Körper aus Gußeisen mit einer Gestaltung, die die Folgen von durch den Kupplungsbereich (14) hindurchgehenden gekrümmten Schlitzen (16, 18, 20) enthält und die nach Oberflächenbearbeitung die Gesamtheit des Rotors (10) bildet, wobei der einstückige Körper aus Gußeisen mit gegossenen, durch das Gußverfahren definierten Oberflächenmitteln (24, 28, 30) versehen ist, um nach der Oberflächenbearbeitung die Kopplungsoberflächenmittel (26) und die gegenüberliegenden ringförmigen Oberflächenmittel (32, 34) des Rotors zu bilden, und

Schaffen der oberflächenbearbeiteten Oberflächenmittel (26, 32, 34), indem eine relativ geringe Menge von Gußeisen von dem einstückigen Gußeisenkörper einschließlich des Gußeisens, welches die gegossenen Oberflächenmittel (24, 28, 30) definiert, entfernt wird.

2. Verfahren nach Anspruch 1, wobei die relativ kleine Menge an von dem einstückigen Gußeisenkörper entferntem Gußeisen eine Schicht einschließlich der gegossenen Oberflächenmittel und mit einer Dicke zwischen 0,6 und 1,2 mm enthält.

3. Verfahren nach Anspruch 1 oder 2, wobei das Gußeisen ferritisches Kugelgraphitgußeisen mit Globulargraphit ist, das außer Eisen die folgenden Komponenten mit dem jeweiligen Gehalt aufweist:

```
C   -   2,8   bis   3,8 Gew.%
Si  -   1,8   bis   5,5 Gew.%
Mn  -   0,01  bis   0,5 Gew.%
Mg  -   0,01  bis   0,07 Gew.%
Cu  -   0,1   bis   0,6 Gew.%
Co  -   0,1   bis   0,5 Gew.%
P   -   0,0   bis   0,2 Gew.%
S   -   0,0   bis   0,2 Gew.%.
```

4. Verfahren nach Anspruch 3, wobei der Gehalt der Si-Komponente innerhalb des Bereichs von 1,8 bis 4,75 Gew.% liegt.

5. Verfahren nach Anspruch 4, wobei das Gußeisen außer Eisen die folgenden Komponenten mit dem jeweiligen Gehalt daran aufweist:
```
C    - 3,2 Gew.%
Si   - 3,25 Gew.%
Mn   - 0,1 Gew.%
Mg   - 0,02 Gew.%
Cu   - 0,3 Gew.%
Co   - 0,3 Gew.%
P    - 0,01 Gew.%
S    - 0,01 Gew.%.
```

6. Verfahren nach Anspruch 4 oder 5, wobei das Verfahren zum Entfernen einer kleinen Menge von Gußeisen, welches die gegossenen Oberflächenmittel definiert, um die Kopplungsoberflächenmittel (26) zu schaffen, ein Drehverfahren ist, mit dem man bearbeitete gegenüberliegende Oberflächenmittel erhält, wobei der Schritt, die oberflächenbearbeiteten gegenüberliegenden ringförmigen Oberflächenmittel (32, 34) zu erhalten, auch die Oberflächenhärtung der bearbeiteten gegenüberliegenden Oberflächenmittel enthält, um oberflächengehärtete gegenüberliegende Oberflächenmittel zu erhalten.

7. Verfahren nach Anspruch 6, wobei das Oberflächenhärten eine Behandlung durch Gasnitrieren unter Hitzeeinwirkung ist.

8. Verfahren nach einem der Ansprüche 4 bis 7, wobei das Verfahren zum Entfernen einer kleinen Menge von Gußeisen, welches die gegossenen Oberflächenmittel definiert, um die Kopplungsoberflächemittel (26) zu schaffen, ein Drehverfahren ist, mit dem man bearbeitete gegenüberliegende Oberflächenmittel erhält, wobei der Schritt, die oberflächenbearbeiteten gegenüberliegenden ringförmigen Oberflächenmittel (32, 34) zu erhalten, auch die Oberflächenhärtung der bearbeiteten gegenüberliegenden Oberflächenmittel enthält, um oberflächengehärtete gegenüberliegende Oberflächenmittel zu erhalten, und danach das Bestreichen der oberflächengehärteten gegenüberliegenden Oberflächenmittel enthält, um die oberflächenbearbeiteten gegenüberliegenden Oberflächenmittel zu erhalten.

9. Verfahren nach Anspruch 3, wobei der Gehalt der Si-Komponente innerhalb des Bereichs von 5,0 bis 5,25 Gew.% ist und bei dem Herstellungsschritt der oberflächenbearbeiteten Kopplungsoberflächenmittel das Verfahren zum Entfernen einer relativ kleinen Menge von Gußeisen, welches die gegossenen Oberflächenmittel definiert, zur Schaffung der oberflächenbearbeiteten Kopplungsoberflächenmittel ein elektrochemisches Abtragverfahren ist, das die oberflächenbearbeiteten Kopplungsoberflächenmittel erzeugt.

10. Verfahren nach einem der vorhergehenden Ansprüche, wobei der Gußeisenkörper (10) durch ein Gußverfahren gegossen wird, bei dem eine Musterform des Gußeisenkörpers aus einem Material, welches verdampft, wenn es in Kontakt mit geschmolzenem Gußeisen kommt, gebildet wird, um die Musterform herum Gußsand in der Weise gelegt wird, daß eine Stelle zur Aufnahme von geschmolzenem Gußeisen frei bleibt, geschmolzenes Gußeisen in die Aufnahmestelle gegossen wird, bis die Musterform durch das geschmolzene Gußeisen verdampft ist und das Gußeisen an die Stelle der Musterform innerhalb des Gußsandes tritt, man das geschmolzene Gußeisen sich verfestigen läßt, um den Gußeisenkörper (10) zu bilden, und man den verfestigten Gußeisenkörper von dem Gußsand trennt.

11. Verfahren nach Anspruch 10, wobei die Musterform aus Polystyren gebildet und mit feuerfestem Material beschichtet wird, bevor der Gußsand darum herum gelegt wird.

12. Elektromagnetische Kupplung mit:
einem Rotor (10), welcher um eine Drehachse drehbar ist, wobei der Rotor einen gegossenen Rotorkörper aufweist,
einem Läufer (60), welcher dazu betreibbar ist, magnetisch mit dem Rotor (10) zur Drehung damit gekoppelt zu werden, und
einer feststehenden ringförmigen Magnetspule (56), welche mit Strom versorgbar ist, um den Rotor und den Läufer (60) magnetisch zu koppeln,
wobei der Rotor (10) einen inneren ringförmigen Bereich (12), einen ringförmigen Kupplungsbereich (14), welcher sich von einem Ende des inneren ringförmigen Bereichs (12) nach außen erstreckt, und einen äußeren ringförmigen Bereich (22) aufweist, der sich von einem äußeren Ende des Kupplungsbereichs (14) aus erstreckt,
wobei der ringförmige Kupplungsbereich (14) Rotorkopplungsoberflächenmittel (26) und eine Folge von gekrümmten Schlitzen (16, 18, 20) aufweist, die von den Kopplungsoberflächenmitteln (26) durch den ringförmigen Kupplungsbereich (14) verlaufen, wobei die gekrümmten Schlitze eine innere Folge von gekrümmten Schlitzen (16), welche durch den Kupplungsbereich (14) verlaufen, und eine äußere Folge von gekrümmten Schlitzen (20) aufweisen, die durch die Kupplung (14) verlaufen,
wobei der Läufer (60) eine Läuferplatte (66) aufweist, welche Läuferkopplungsoberflächenmittel (70) zum Eingriff mit den Rotorkopplungsoberflächenmitteln (26) und eine Folge von gekrümmten Schlitzen (72, 74) hat, die in zusammenwirkender Beziehung in bezug auf die Folge von gekrümmten Schlitzen (16, 18, 20) des Rotorkupplungsbereichs (14) angeordnet sind, um einen Weg für magnetischen Fluß zu schaffen, der vielfach hin und her zwischen dem Rotorkupplungsbereich (14) und der Läuferplatte (66) verläuft,
wobei die inneren und äußeren ringförmigen Bereiche (12, 22) gegenüber und mit Abstand zueinander liegende ringförmige Oberflächenmittel (32, 34) zur Aufnahme der ringförmigen Magnetspule (56) dazwischen aufweisen, so daß, wenn die Magnetspule mit Strom versorgt wird, ein Feld von magnetischem Fluß in den Magnetflußwegen in den inneren und äußeren ringförmigen Rotorbereichen (12, 22) gebildet wird, das mit dem Magnetflußweg zwischen dem Kupplungsbereich (14) und der Läuferplatte (66) verbunden ist,
dadurch gekennzeichnet, daß der Rotor (10) in einem Stück aus Gußeisen mit den inneren und äußeren Folgen von gekrümmten Schlitzen (16, 18, 20) hergestellt ist, die durch gegossene Oberflächen des einstückigen Gußeisenkörpers gebildet sind.

13. Elektromagnetische Kupplung nach Anspruch 12, wobei das Gußeisen Kugelgraphitgußeisen mit Globulargraphit ist.

14. Elektromagnetische Kupplung nach Anspruch 12 oder 13, wobei das Gußeisen neben Eisen die folgenden Komponenten mit dem jeweiligen Gehalt aufweist:

| C | – | 2,8 | bis | 3,8 | Gew.% |
|---|---|-----|-----|-----|-------|
| Si | – | 1,8 | bis | 5,5 | Gew.% |
| Mn | – | 0,01 | bis | 0,5 | Gew.% |
| Mg | – | 0,01 | bis | 0,07 | Gew.% |
| Cu | – | 0,1 | bis | 0,6 | Gew.% |
| Co | – | 0,1 | bis | 0,5 | Gew.% |
| P | – | 0,0 | bis | 0,2 | Gew.% |
| S | – | 0,0 | bis | 0,2 | Gew.%. |

15. Elektromagnetische Kupplung nach Anspruch 14, wobei der Gehalt an der Si-Komponente innerhalb des Bereiches von 1,8 bis 4,75 Gew.% liegt.

16. Elektromagnetische Kupplung nach Anspruch 15, wobei das Gußeisen neben Eisen die folgenden Komponenten mit dem jeweiligen Gehalt aufweist:

C      - 3,2 Gew.%  
Si     - 3,25 Gew.%  
Mn     - 0,1 Gew.%  
Mg     - 0,02 Gew.%  
Cu     - 0,3 Gew.%  
Co     - 0,3 Gew.%  
P      - 0,01 Gew.%  
S      - 0,01 Gew.%

**Revendications**

1. Procédé pour réaliser un rotor pour un embrayage électromagnétique, comprenant:

la coulée d'un corps de rotor et le formage d'un rotor (10) à partir du corps de rotor;

ledit rotor (10) comprenant une portion annulaire interne (12), une portion d'embrayage annulaire (14) s'étendant vers l'extérieur à partir d'une extrémité de ladite portion annulaire interne (12) et comprenant une série de fentes arquées (16, 18, 20) qui la traversent, et une portion annulaire externe (22) s'étendant à partir d'une extrémité externe de ladite portion d'embrayage annulaire (14), lesdites fentes arquées comprenant une série interne de fentes arquées (6) s'étendant à travers ladite portion d'embrayage (14) et une série externe de fentes arquées (20) s'étendant à travers ladite portion d'embrayage (14);

ladite portion d'embrayage (14) comprenant un moyen formant surface d'accouplement (26) pour amener en engagement un moyen formant surface d'accouplement coopérante (70) d'un induit (60) comportant une série de fentes arquées (72, 74) à l'intérieur, pouvant coopérer avec les fentes arquées (16, 18, 20) de ladite portion d'embrayage (14) de manière à établir un trajet de flux magnétique qui circule en va-et-vient entre la portion d'embrayage (14) du rotor et l'induit (60) une pluralité de fois; et

lesdites portions annulaires interne et externe (12, 22) comportant des moyens formant surfaces annulaires opposées (32, 34) pour coopérer avec un bobinage magnétique annulaire fixe (56) disposé entre eux de manière que lorsque le bobinage magnétique (5) est excité, un champ de flux magnétique soit établi à l'intérieur de trajets de flux dans lesdites portions annulaires interne et externe (12, 22) reliés au trajet de flux entre la portion d'embrayage de rotor (14) et l'induit (60);

ledit procédé comprenant les étapes consistant à:

couler ledit corps de rotor sous forme d'un corps d'un seul tenant en fonte présentant une configuration qui comprend ladite série de fentes arquées (16, 18, 20) s'étendant à travers la portion d'embrayage (14) et qui, après finition de surface, forme la totalité dudit rotor (10), ledit corps d'un seul tenant en fonte étant muni de moyens formant surfaces coulées (24, 28, 30) définies par la procédure de coulée pour constituer, après finition de surface, ledit moyen formant surface d'accouplement (26) et lesdits moyens formant surfaces annulaires opposées (32, 34) dudit rotor, et

constituer lesdits moyens formant surfaces finies (26, 32, 34) en éliminant une quantité relativement petite de fonte dudit corps en fonte d'un seul tenant comprenant la fonte définissant lesdits moyens

14

formant surfaces coulées (24, 28, 30).

2. Procédé selon la revendication 1, dans lequel la quantité relativement petite de fonte retirée dudit corps en fonte d'un seul tenant comprend une couche comportant lesdits moyens formant surfaces coulées et présentant une épaisseur comprise entre 0,6 et 1,2 millimètre.

3. Procédé selon la revendication 1 ou 2, dans lequel ladite fonte est une fonte ductile ferritique avec du graphite nodulaire qui comprend en plus du fer les composants suivants selon les quantités suivantes:

```
C    –    2,8    à    3,8 % en poids
Si   –    1,8    à    5,5 % en poids
Mn   –    0,01   à    0,5 % en poids
Mg   –    0,01   à    0,07 % en poids
Cu   –    0,1    à    0,6 % en poids
Co   –    0,1    à    0,5 % en poids
P    –    0,0    à    0,20 % en poids
S    –    0,O    à    0,20 % en poids
```

4. Procédé selon la revendication 3, dans lequel la quantité dudit composant Si est compris dans la plage de 1,8 à 4,75 % en poids.

5. Procédé selon la revendication 4, dans lequel ladite fonte comprend en plus du fer les composants suivants selon les quantités suivantes:

```
C     - 3,2 % en poids
Si    - 3,25 % en poids
Mn    - 0,1 % en poids
Mg    - 0,02 % en poids
Cu    - 0,3 % en poids
Co    - 0,3 % en poids
P     - 0,01 % en poids
S     - 0,01 % en poids
```

6. Procédé selon la revendication 4 ou 5, dans lequel la procédure pour éliminer la petite quantité de fonte définissant les moyens formant surfaces coulées pour constituer ledit moyen formant surface d'accouplement (26) est une procédure de tournage au tour qui réalise un moyen formant surface d'accouplement usinée (26), l'étape consistant à constituer ledit moyen formant surface d'accouplement finie (26) comprenant également le durcissement de surface du moyen formant surface d'accouplement usinée pour constituer ledit moyen formant surface d'accouplement finie.

7. Procédé selon la revendication 6, dans lequel ledit durcissement de surface est un traitement de nitruration au gaz à chaud.

8. Procédé selon l'une quelconque des revendications 4 à 7, dans lequel la procédure pour éliminer une petite quantité de fonte définissant les moyens formant surfaces coulées pour constituer lesdits moyens formant surfaces annulaires opposées (32, 34) est une procédure de tournage au tour qui réalise les moyens formant surfaces opposées usinées, l'étape consistant à réaliser lesdits moyens formant surfaces annulaires opposées finies (32, 34) comprenant également un durcissement de surface des moyens formant surfaces opposées usinées pour fournir des moyens formant surfaces opposées à surface durcie et ensuite à peindre les moyens formant surfaces opposées à surface durcie pour obtenir les moyens formant surfaces opposées finies.

9. Procédé selon la revendication 3, dans lequel la quantité dudit composant Si est située dans la plage comprise entre 5,0 et 5,25 % en poids, et en ce qu'au cours de l'étape pour constituer lesdits moyens formant surfaces d'accouplement finies, la procédure pour éliminer la quantité relativement petite de fonte définissant lesdits moyens formant surfaces coulées pour obtenir ledit moyen formant surface d'accou-

15

plement finie est une procédure d'usinage par décharge électrique qui produit ledit moyen formant surface d'accouplement finie.

10. Procédé selon l'une quelconque des revendications précédentes, dans lequel ledit corps en fonte (10) est coulé par une procédure de coulée qui comprend les étapes consistant à former un modèle dudit corps en fonte à partir d'un matériau capable d'être vaporisé quand il est amené en contact avec de la fonte fondue, à placer du sable de coulée autour du modèle de manière à laisser un emplacement pour recevoir la fonte fondue, à verser la fonte fondue dans l'emplacement de réception jusqu'à ce que le modèle soit vaporisé par la fonte fondue et que la fonte remplace le modèle dans le sable de coulée, à permettre à la fonte fondue de se solidifier pour former ledit corps en fonte (10) et ensuite à séparer le corps en fonte solidifié du sable de coulée.

11. Procédé selon la revendication 10, dans lequel ledit modèle est formé en polystyrène et est revêtu d'un réfractaire avant que le sable de coulée soit placé autour.

12. Embrayage électromagnétique comprenant:

un rotor (10) pouvant tourner autour d'un axe de rotation, ledit rotor comprenant un corps de rotor coulé;

un induit (60) pouvant être accouplé magnétiquement audit rotor (10) de façon à tourner avec lui; et

un bobinage magnétique annulaire fixe (56) pouvant être excité pour accoupler magnétiquement ledit rotor et ledit induit (60),

ledit rotor (10) comprenant une portion annulaire interne (12), une portion d'embrayage annulaire (14) s'étendant vers l'extérieur à partir d'une extrémité de ladite portion annulaire interne (12) et une portion annulaire externe (22) s'étendant à partir d'une extrémité externe de ladite portion d'embrayage (14),

ladite portion d'embrayage annulaire (14) comportant un moyen formant surface d'accouplement de rotor (26) et une série de fentes arquées (16, 18, 20) s'étendant à partir dudit moyen formant surface d'accouplement (26) à travers ladite portion d'embrayage annulaire (14), lesdites fentes arquées comprenant une série interne de fentes arquées (16) s'étendant à travers ladite portion d'embrayage (14) et une série externe de fentes arquées (20) s'étendant à travers ledit embrayage (14),

ledit induit (60) comprenant une plaque d'induit (66) comportant un moyen formant surface d'accouplement d'induit (70) pour amener en engagement ledit moyen formant surface d'accouplement de rotor (26) et une série de fentes arquées (72, 74) positionnées selon une relation de coopération par rapport à la série de fentes arquées (16, 18, 20) de ladite portion d'embrayage de rotor (14) de manière à établir un trajet de flux magnétique qui circule en va-et-vient entre ladite portion d'embrayage de rotor (14) et ladite plaque d'induit (66) une pluralité de fois,

lesdits portions annulaires interne et externe (12, 22) comprenant des moyens formant surfaces annulaires espacées et opposées (32, 34) pour recevoir ledit bobinage magnétique annulaire (56) entre elles de manière que lorsque ledit bobinage magnétique est excité, un champ de flux magnétique soit établi à l'intérieur de trajet de flux magnétique dans lesdites portions de rotor annulaire interne et externe (12, 22) reliés audit trajet de flux magnétique entre ladite portion d'embrayage (14) et ladite plaque d'induit (66),

caractérisé en ce que le rotor (10) est formé sous forme d'un corps en fonte d'un seul tenant comprenant lesdites séries interne et externe de fentes arquées (16, 18, 20) définies par des surfaces coulées dudit corps d'un seul tenant en fonte.

13. Embrayage électromagnétique selon la revendication 12, dans lequel ladite fonte est une fonte ductile ferritique avec du graphite nodulaire.

14. Embrayage électromagnétique selon la revendication 12 ou 13, dans lequel ladite fonte comprend en plus du fer les composants suivants selon les quantités suivantes:

```
C     -    2,8    à    3,8 % en poids
Si    -    1,8    à    5,5 % en poids
Mn    -    0,01   à    0,5 % en poids
Mg    -    0,01   à    0,07 % en poids
Cu    -    0,1    à    0,6 % en poids
Co    -    0,1    à    0,5 % en poids
P     -    0,0    à    0,20 % en poids
S     -    0,O    à    0,20 % en poids
```

15. Embrayage électromagnétique selon la revendication 14, dans lequel la quantité dudit composant Si est située dans la plage comprise entre 1,8 et 4,75 % en poids.

16. Embrayage électromagnétique selon la revendication 15, dans lequel ladite fonte comprend en plus du fer les composants suivants selon les quantités suivantes:

```
C     - 3,2 % en poids
Si    - 3,25 % en poids
Mn    - 0,1 % en poids
Mg    - 0,02 % en poids
Cu    - 0,3 % en poids
Co    - 0,3 % en poids
P     - 0,01 % en poids
S     - 0,01 % en poids
```

Fig.1.

# *Fig. 2.*

*Fig.3.*

*Fig.4.*